# EUROPÄISCHE PATENTSCHRIFT

(11) **EP 2 105 184 B1**
(45) Veröffentlichungstag und Bekanntmachung des Hinweises auf die Patenterteilung: **28.08.2013**
(21) Anmeldenummer: 09156314.8
(22) Anmeldetag: 26.03.2009
(51) Int. Cl.: B01D 46/24, B01D 45/06, B01D 45/08, B01D 50/00, B01D 46/00

(54) **Filter**
Filter
Filtre

(30) Priorität: 27.03.2008 DE 202008004288 U
(43) Veröffentlichungstag der Anmeldung: 30.09.2009
(73) Patentinhaber: MANN+HUMMEL GmbH, 71638 Ludwigsburg (DE)
(72) Erfinder: Münkel, Karlheinz, 75038, Oberderdingen-Flehingen (DE); Becker, Stefan, 68305 Mannheim (DE); Nguyen, Duc Cuong, 30880, Laatzen (DE); Ackermann, Steffen, 67166 Otterstadt (DE)

(56) Entgegenhaltungen:
- DE-A1- 10 327 441
- US-A1- 2007 186 526
- US-B1- 6 599 350

## Beschreibung

### Technisches Gebiet

Die Erfindung betrifft einen Filter der im Oberbegriff des Anspruchs 1 angegebenen Gattung.

### Stand der Technik

Filter bestehen im Allgemeinen aus einem Filtertopf und einem darin aufgenommenen Filtereinsatz. Häufig ist dieser Filtereinsatz im Wesentlich zylindrisch gestaltet, so dass das zu filternde Fluid den Filtereinsatz radial von außen nach innen durchströmt. Zur Befestigung des Filtereinsatzes und dem stirnseitigen Abschluss ist eine Endscheibe vorgesehen, die mit dem stirnseitigen Ende des Filtertopfes verbunden ist.

Derartige Filter werden häufig als Luftentölelemente eingesetzt und zwar in stationären und fahrbaren Druckluftanlagen. Die hierfür verwendeten Kompressoren benötigen Öl zur Schmierung und Abdichtung der sich bewegenden Teile, wodurch ölhaltige Gase entstehen. Um den größten Teil dieses Öls zurückzugewinnen und die Luft zu reinigen, werden Luftentölelemente benutzt, die im Zuge der Wartung der Anlage regelmäßig auszutauschen sind. Gattungsgemäße Filter Sind in US 2007/0186526 und US 6599350 offenbart.

Der vorliegenden Erfindung liegt die Aufgabe zugrunde, einen Filter der gattungsgemäßen Art zu schaffen, der einfach im Aufbau und kostengünstig herzustellen ist.

Diese Aufgabe wird durch einen Filter mit den Merkmalen des Anspruchs 1 gelöst.

### Offenbarung der Erfindung

Gemäß der Erfindung sind am Umfangsrand der Endscheibe Ringsegmente vorgesehen, die das Ende des Filtertopfes axial übergreifen und radial nach innen gerichtete Schnapphaken aufweisen, wobei am Filtertopf mindestens ein radial nach außen gerichteter Vorsprung angeordnet ist, der von den Schnapphaken hintergriffen wird. Auf diese Weise ist die Montage der Endscheibe am Filtertopf äußerst einfach, da die Endscheibe nicht ausgerichtet werden muss und einfach durch Aufdrücken befestigt wird. Eine Verdrehung der Endscheibe zu dem Gehäuse ist dabei trotzdem gegeben.

Außerdem ist es zweckmäßig, dass an den Ringsegmenten stirnseitige Öffnungen vorgesehen sind. Diese Öffnungen ermöglichen eine kostengünstige Endscheibe mit Schnapphaken im Spritzgussverfahren, da hierdurch das Spritzgusswerkzeug die Hinterschnitte für die Schnapphaken ausformen kann. Die Schnapphaken werden dabei als Hinterschnitt nur unterhalb der Öffnungen gebildet und durch die Öffnungen entformt. Unterhalb der geschlossenen Bereiche zwischen den Öffnungen befinden sich dann keine Schnapphaken. Andere Verfahren z.B. Zwangsentformung oder andere Geometrien sind ebenfalls möglich. Darüber hinaus ist an der Außenseite des Filtertopfes ein umlaufender Absatz angeordnet ist, so dass zwischen dem freien Ende der Ringsegmente und dem Absatz eine umlaufende Nut zur Aufnahme eines Dichtrings gebildet wird. Auf diese Weise wird der Dichtring durch die Montage der Endscheibe automatisch in seiner Lage fixiert, ohne dass zusätzliche Maßnahmen erforderlich sind. Der Dichtring erhebt sich bezüglich seines Umfangs etwas über den Außenumfang der Ringsegmente, so dass der Dichtring an der Innenwandung eines auf den Filtertopf aufzusetzenden Filterkopfes anliegt und damit die Abdichtung bewirkt.

Damit die Endscheibe an dem Ende des Filtertopfes spielfrei gehalten wird, ist es zweckmäßig, dass die Endscheibe im Bereich ihres äußeren Umfangs einen axialen Abschnitt aufweist, der an der Innenwandung des Filtertopfes dichtend anliegt. Zweckmäßigerweise ist der Filter als Luftentölbox ausgeführt und weist einen Sammelraum für abgeschiedenes Öl auf. Dabei ist es zweckmäßig, dass in der Endscheibe ein Vorabscheider integriert ist, wobei dieser Vorabscheider aus einer Vielzahl in axialer Richtung des Filtereinsatzes gekrümmter Leitelemente besteht, die zwischen dem axialen Abschnitt und einem koaxial zu diesem befindlichen Stutzen angeordnet sind.

### Kurze Beschreibung der Zeichnungen

Ein Ausführungsbeispiel des erfindungsgemäßen Filters ist nachfolgend anhand der Zeichnung näher erläutert. In der Zeichnung zeigt:

Fig. 1 die Seitenansicht eines Filtertopfes und einer Endscheibe,

Fig. 2 einen Längsschnitt durch einen Filter,

Fig. 3 in vergrößerter Darstellung die Einzelheit III in Fig. 2.

### Ausführungsform(en) der Erfindung

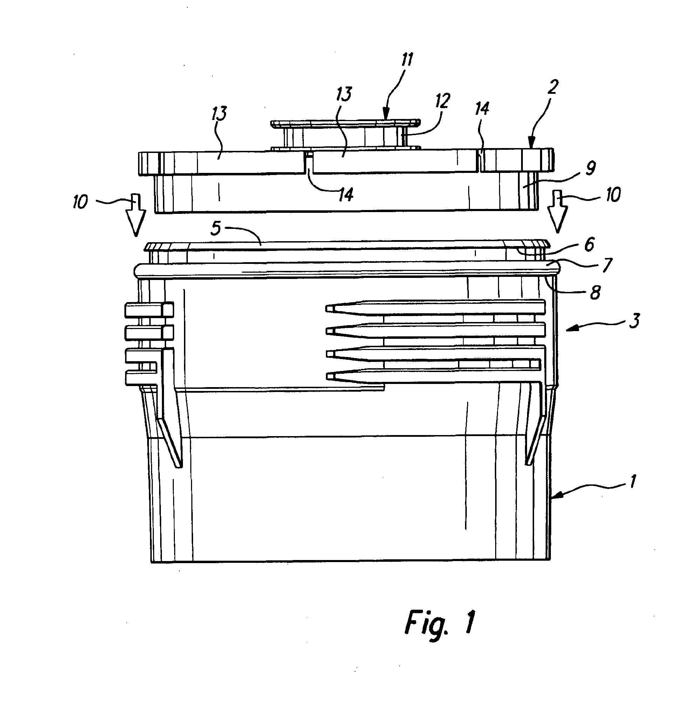

Die Fig. 1 zeigt eine Seitenansicht eines im Wesentlichen zylindrischen Filtertopfes 1 und einer mit diesem zu verbindenden Endscheibe 2 eines Filters 3. Bei dem dargestellten Beispiel des Filters 3 handelt es sich um eine Luftentölbox, die insbesondere bei Luftkompressoren zum Einsatz kommt. Der Filtertopf 1 weist an einem stirnseitigen Ende 4 einen nach außen gerichteten radialen Vorsprung 5 auf, der in Richtung auf die Endscheibe 2 konisch verjüngt ist und auf der zum Filtertopf 1 gewandten Seite einen radialen Absatz 6 aufweist. Der Vorsprung 5 ist über den Gesamtumfang verlaufend ausgeführt. In einem Abstand zu dem Vorsprung 5 befindet sich am Umfang des Filtertopfes 1 ein Dichtring 7, der an einem umlaufenden Absatz 8 anliegt.

Die Endscheibe 2 umfasst einen axialen Abschnitt 9, dessen Umfang so bemessen ist, dass er stirnseitig in den Filtertopf 1 gesteckt werden kann, wie dies durch die Pfeile 10, die die Montagerichtung angeben, dargestellt ist. An der in Fig. 1 oberen Seite weißt die Endscheibe 2 einen Anschlussstutzen 11 mit einer Nut 12 zur Aufnahme einer Dichtung auf. An ihrem äußeren Umfang besitzt die Endscheibe 2 mehrere Ringsegmente 13, die durch schmale Radialschlitze 14 voneinander getrennt sind. Wie später noch näher erläutert wird, übergreifen die Ringsegmente 13 in montiertem Zustand die Endscheibe 2, d. h. nach dem Zusammenfügen gemäß den Pfeilen 10 nimmt der Filtertopf 1 an dessen Ende 4 den Vorsprung 5 in einer in den Ringsegmenten 13 gebildeten axialen Nut auf.

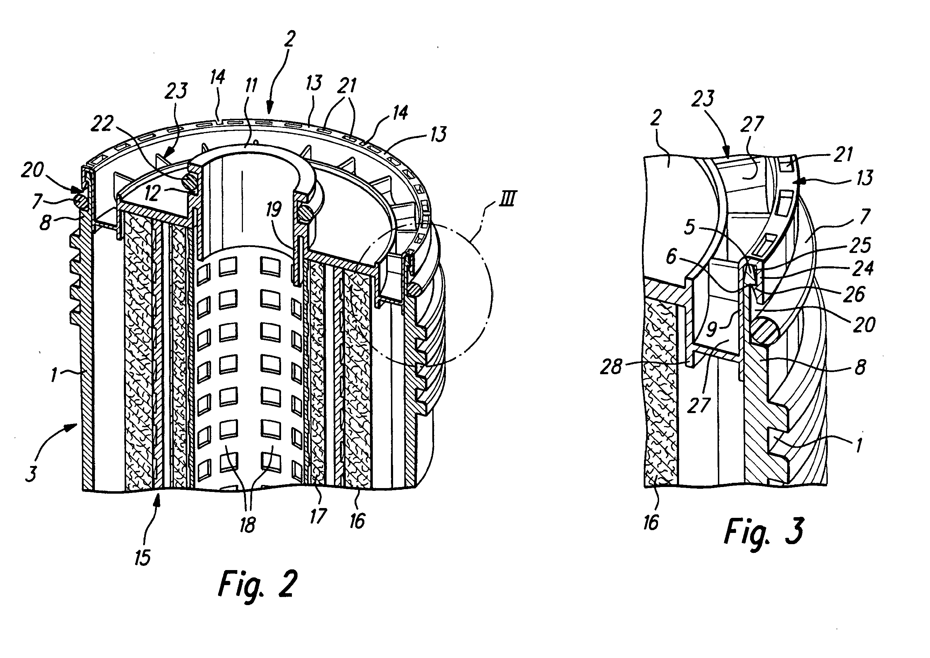

Die Fig. 2 zeigt einen Längsschnitt durch den Filter 3. In dem Filtertopf 1 befindet sich konzentrisch ein Filtereinsatz 15, der aus zwei zylindrischen Schichten 16, 17 eines Filtermaterials und einem innerhalb der radial inneren Schicht 17 befindlichen Stützgitter 18 besteht. Am stirnseitigen Ende des Filtereinsatzes 15 ist die Endscheibe 2 angeordnet. Am Stutzen 11 ist ein sich axial nach innen erstreckender Hülsenabschnitt 19 angeformt, der in das Ende des Stützgitters 18 ragt und somit den Filtereinsatz 15 zentrisch positioniert. In Fig. 2 ist auch eine in der Nut 12 angeordnete Dichtung 22 gezeigt.

Die Endscheibe 2 weist an ihrem Umfang mehrere Ringsegmente 13 auf, die lediglich durch schmale Radialschlitze 14 voneinander getrennt sind. Durch die Radialschlitze 14 ist eine ausreichende Elastizität gegeben, um gemeinsam mit dem am Filtertopf 1 ausgebildeten radialen Vorsprung 5 eine Schnappverbindung zu bilden, auf deren Ausgestaltung später noch näher eingegangen wird. In montiertem Zustand gemäß Darstellung in Fig. 2 bildet der Abstand der dem Filtertopf 1 zugewandten Enden der Ringsegmente 13 zu dem Absatz 8 eine umlaufende Nut 20, in der sich der Dichtring 7 befindet. An den Ringsegmenten 13 sind mehrere stirnseitige Öffnungen 21 vorgesehen. Benachbart zu den Ringsegmenten 13 befindet sich auf deren radial inneren Seite ein Vorabscheider 23.

In Fig. 3 ist eine vergrößerte Darstellung der Einzelheit III in Fig. 2 gezeigt. Daraus ist ersichtlich, dass die Ringsegmente 13 einen axialen Abschnitt 24 besitzen, mit dem sie das stirnseitige Ende des Filtertopfes 1 übergreifen. Die Endscheibe 2 umfasst auch den axialen Abschnitt 9, wie bereits zu Fig. 1 beschrieben, der an der Innenwandung des Filtertopfes 1 dichtend anliegt. Zwischen den axialen Abschnitten 9 und 24 ist eine axiale Nut 25 gebildet, in der das stirnseitige Ende des Filtertopfes 1 aufgenommen ist. Am freien Ende des axialen Abschnitts 24 des Ringsegments 13 befindet sich ein radial nach innen gerichteter Schnapphaken 26, der bei der Montage der Endscheibe 2 am Filtertopf 1 über den umlaufenden Vorsprung 5 geschoben wird und an dem radialen Absatz 6 einrastet. Zur Entformung des Schnapphakens bei der spritzgusstechnischen Herstellung der Endscheibe 2 sind strinseitige Öffnungen 21 vorgesehen.

Wie auch aus Fig. 3 ersichtlich ist, befindet sich in dem Abstand zwischen dem Ringsegment 13 und dem Absatz 8 der Dichtring 7. Der Vorabscheider 23 besteht aus einer Vielzahl von in axialer Richtung gekrümmten Leitelementen 27, die zwischen dem axialen Abschnitt 9 und einem koaxial zu diesem befindlichen Stutzen 28 angeordnet sind. Der Vorabscheider 23 erzwingt eine Richtungsänderung des ölhaltigen Luftstroms. Diese Richtungsänderung bewirkt, dass die Ölanteile zum Teil abgeschieden werden, weil sie aufgrund ihrer größeren Masse geneigt sind, ihre Bewegungsrichtung beizubehalten. Es entstehen dabei Tröpfchen, die nach unten fallen oder an der Innenwand des Filtertopfes 1 nach unten laufen. Die dann noch in dem Luftstrom enthaltenen Ölanteile werden in den Schichten 16 und 17 (vgl. Fig. 2) abgeschieden. Für gleiche Teile in den Fig. 2 und 3 stimmen die Bezugszeichen jeweils überein.

Durch die vorliegende Erfindung lässt sich gegenüber den bisher bekannten Filtern der Montageaufwand für das Einsetzten des Dichtrings reduzieren. Die Verfügbarkeit des Filters ist lageunabhängig. Die Montierbarkeit des Filtertopfes wird dadurch erleichtert, dass die Verdrehbarkeit zwischen Endscheibe und Filtertopf gegeben ist. Ein weiterer Vorteil besteht darin, dass die Endscheibe auf einfache Weise mit einem Vorabscheider kombiniert werden kann.

## Patentansprüche

1. Filter, umfassend einen Filtertopf (1) und einen darin aufgenommenen im Wesentlichen zylindrischen Filtereinsatz (15) sowie eine stirnseitig am Filtereinsatz (15) angeordneten Endscheibe (2), die mit einem stirnseitigen Ende (4) des Filtertopfes (1) verbunden ist, wobei die Endscheibe (2) an ihrem Umfangsrand derart gestaltet ist, dass sie das Ende (4) des Filtertopfes (1) übergreift und Rastmittel (26) zum formschlüssigen Verbinden von Endscheibe (2) und Filtertopf (1) vorgesehen sind, **dadurch gekennzeichnet, dass** am Umfangsrand der Endscheibe (2) Ringsegmente (13) vorgesehen sind, die das Ende (4) des Filtertopfes (1) axial übergreifen und radial nach innen gerichtete Schnapphaken (26) aufweisen und dass am Filtertopf (1) mindestens ein radial nach außen gerichteter Vorsprung (5) angeordnet ist, der von den Schnapphaken (26) hintergriffen wird, wobei an der Außenseite des Filtertopfes (1) ein umlaufender Absatz (8) angeordnet ist, so dass zwischen dem freien Ende der Ringsegmente (13) und dem Absatz (8) eine umlaufende Nut (20) zur Aufnahme eines Dichtrings (7) gebildet wird.

2. Filter nach Anspruch 1, **dadurch gekennzeichnet, dass** an den Ringsegmenten (13) stirnseitige Öffnungen (21) vorgesehen sind.

3. Filter nach einem der Ansprüche 1 bis 2, **dadurch gekennzeichnet, dass** die Endscheibe (2) im Bereich ihres äußeren Umfangs einen axialen Abschnitt (9) aufweist, der an der Innenwandung des Filtertopfes (1) dichtend anliegt.

4. Filter nach einem der Ansprüche 1 bis 3, **dadurch gekennzeichnet, dass** der Filter (3) als Luftentölbox ausgeführt ist und einen Sammelraum für abgeschiedenes Öl aufweist.

5. Filter nach Anspruch 4, **dadurch gekennzeichnet, dass** in der Endscheibe (2) ein Vorabscheider (23) integriert ist.

6. Filter nach Anspruch 5, **dadurch gekennzeichnet, dass** der Vorabscheider (23) aus einer Vielzahl in axialer Richtung des Filtereinsatzes (15) gekrümmter Leiteelemente (27) besteht, die zwischen dem axialen Abschnitt (9) und einem koaxial zu diesem befindlichen Stutzen (28) angeordnet sind.

## Claims

1. Filter, comprising a filter bowl (1) and an essentially cylindrical filter insert (15) received therein as well as an end plate (2) frontally disposed at the filter insert (15), which is connected with a frontal end (4) of the filter bowl (1), the end plate (2) being designed at its peripheral edge in such a way that it overlaps the end (4) of the filter bowl (1) and latching means (26) for a form-fit connection of end plate (2) and filter bowl (1) are provided, **characterized in that** ring segments (13), which axially overlap the end (4) of the filter bowl (1) and feature radially inwardly directed snap-in hooks (26), are provided at the peripheral edge of the end plate (2), and that at least one radially outwardly directed protrusion (5), which is engaged from behind by the snap-in hooks (26), is disposed at the filter bowl (1), a circumferential shoulder (8) being disposed at the exterior side of the filter bowl (1) so that between the free end of the ring segments (13) and the shoulder (8) a circumferential groove (2) for receiving a seal ring (7) is formed.

2. Filter according to claim 1, **characterized in that** frontal openings (21) are provided at the ring segments (13).

3. Filter according to one of the claims 1 to 2, **characterized in that** the end plate (2) features in the area of its outer circumference an axial section (9), which sealingly contacts the internal wall of the filter bowl (1).

4. Filter according to one of the claims 1 to 3, **characterized in that** the filter (3) is designed as air de-oiling box and features a collecting chamber for separated oil.

5. Filter according to claim 4, **characterized in that** a pre-separator (23) is integrated in the end plate (2).

6. Filter according to claim 5, **characterized in that** the pre-separator (23) consists of a plurality of guide elements (27) curved in axial direction of the filter insert (15), which are disposed between the axial section (9) and a connecting piece (28) arranged coaxially in relation to it.

## Revendications

1. Filtre, constitué d'un pot de filtre (1) et d'un insert de filtre (15) essentiellement cylindrique inséré dans ce pot, de même que d'un disque d'extrémité (2) placé à l'avant sur l'insert de filtre (15) et relié à une extrémité frontale (4) du pot de filtre (1), le bord circonférentiel du disque d'extrémité (2) étant exécuté de telle sorte qu'il recouvre l'extrémité (4) du pot de filtre (1) et que des éléments d'encliquetage (26) servant à former un assemblage craboté du disque d'extrémité (2) et du pot de filtre (1) sont prévus, **caractérisé en ce que** des segments annulaires (13) chevauchant l'extrémité (4) du pot de filtre (1) en sens axial et présentant en sens radial des crochets à encliquetage (26) orientés vers l'intérieur sont prévus sur le bord circonférentiel du disque d'extrémité (2) et **en ce qu'**une saillie (5), au moins au nombre d'une, orientée en sens radial vers l'extérieur et prise de l'arrière par les crochets à encliquetage (26) est prévue sur le pot de filtre (1), un épaulement (8) circulaire étant disposé sur la face extérieure du pot de filtre (1) de manière à former, entre l'extrémité libre des segments annulaires (13) et l'épaulement (8), une rainure (20) circulaire permettant de réceptionner une bague d'étanchéité (7).

2. Filtre selon la revendication 1, **caractérisé en ce que** des ouvertures frontales (21) sont prévues sur les segments annulaires (13).

3. Filtre selon l'une des revendications 1 à 2, **caractérisé en ce que** le disque d'extrémité (2) présente une section axiale (9) près de sa circonférence extérieure, laquelle est appliquée de façon étanche sur la paroi intérieure du pot de filtre (1).

4. Filtre selon l'une des revendications 1 à 3, **caractérisé en ce que** le filtre (3) est exécuté en tant que boîtier de déshuilage d'air et présente un compartiment collecteur pour l'huile séparée.

5. Filtre selon la revendication 4, **caractérisé en ce qu**'un pré-séparateur (23) est intégré au disque d'extrémité (2).

6. Filtre selon la revendication 5, **caractérisé en ce que** le pré-séparateur (23) est constitué d'un grand nombre d'éléments de guidage (27) incurvés en sens axial de l'insert de filtre (15) et disposés entre la section axiale (9) et une tubulure (28) placée de manière coaxiale par rapport à cette section.
